# EUROPEAN PATENT SPECIFICATION

(11) **EP 2 211 035 B1**
(45) Date of publication and mention of the grant of the patent: **07.03.2012**
(21) Application number: 09001037.2
(22) Date of filing: 26.01.2009
(51) Int. Cl.: F01N 3/20, F01N 13/08, B62K 11/00

(54) **Motorcycle equipped with an exhaust gas purifying apparatus with improved layout**
Motorrad mit einer Abgasreinigungsvorrichtung mit verbessertem Design
Motocyclette dotée d'un appareil de purification de gaz d'échappement avec un agencement amélioré

(43) Date of publication of application: 28.07.2010
(73) Proprietor: YAMAHA MOTOR EUROPE N.V., 1119 NC Schiphol-Rijk (NL)
(72) Inventor: Locati, Claudio, 20043 Arcore (MI) (IT); Ghezzi, Alessandro, 20052 Monza (MI) (IT); Toshiharu, Shigeta, 20148 Milano (IT)
(74) Representative: Grünecker, Kinkeldey, Stockmair & Schwanhäusser

(56) References cited:
- EP-A- 1 614 613
- EP-A- 1 744 025
- EP-A- 1 921 287
- JP-A- 58 220 916

## Description

The present invention relates to the field of motorcycles. In particular, the present invention relates to an exhaust gas purifying apparatus for a motorcycle and a motorcycle equipped with such an exhaust gas purifying apparatus. In more detail, the present invention relates to an exhaust gas purifying apparatus for a motorcycle, with said exhaust gas purifying apparatus having an improved layout as on how the one or more catalysts are disposed along said apparatus.

It is well known in the field of motorcycles that nowadays motorcycles with combustion engines have to be equipped with catalysts so as to comply with anti-pollution rules and/or requirements. The catalysts are located inside the main exhaust gas pipe, the function of said catalysts (one or more depending on the exigencies and/or circumstances) being that of collecting and trapping the pollutant components of the exhaust gases, thus allowing only permitted substances to be emitted and dispersed in the atmosphere. Accordingly, many efforts have been dedicated over the last years to the development of exhaust gas pipes and/or apparatuses offering improved and adequate performances. However, the development of exhaust gas pipes, in particular for motorcycles, offering adequate performance and efficiency in terms of quantity of pollutants captured and trapped, but still complying with other requirements relating to motorcycles, in particular to motorbikes, such as, for instance, the overall layout, look and appearance, aerodynamics or the like, has revealed to be a quite difficult and challenging task. One of the requirements to be accomplished by an exhaust gas purifying apparatus relates to the activation temperature of the catalysts, namely the temperature range within which adequate performances in terms of pollutants captured and/or trapped is possible.

In turn, the activation temperature depends on the location of the one or more catalysts. This in particular is due to the fact that the temperature of the catalysts may be influenced by the heat generated by the main engine and dissipated to the outside. Accordingly, placing the catalysts too close to the main engine, in particular to the combustion chamber, may result in the catalysts becoming overheated and reaching a temperature higher than the proper activation temperature. Also this overheating may result in the catalysts not working properly.

A further requirement to be taken into account relates to the fact that the position and disposition of the catalysts influence the overall appearance and dimension as well as the aerodynamic of the motorcycle. Common catalysts have a length usually comprised between about 10cm up to 25-35cm; this means that, in those cases in which at least two catalysts are used, at least two rectilinear portions of the main exhaust gas pipe with the same length or more, each adapted to receive one of the two catalysts have to be provided. Accordingly, even in those cases in which a unique catalyst is needed or used, finding a convenient location for a corresponding rectilinear portion of the main exhaust gas pipe wherein said unique catalyst is received (in the following also referred to as catalyst receiving portion of the main pipe) represents an important challenge. Moreover, even during assembly of the motorcycle, in particular, during assembly of the exhaust gas purifying apparatus, several problems may arise; in particular, this is due to the fact that said catalyst receiving portion has to be provided in one piece so that it may become difficult to deal with said catalyst receiving portion. In particular, it may become difficult to assemble said rectilinear portion and/or to introduce same into spaces of reduced dimension such as, for instance, into spaces between the engine and the tubes of the main frame as well as into small spaces defined by other component parts of the motorcycle. Usually, to facilitate the assembly operations, the main exhaust gas pipe comprises several detachable portions adequately connected to each other by means of corresponding joint members; providing several portions with corresponding several joint members could help in finding an appropriate shape for the main pipe. However, this opportunity is limited by the need of providing a catalyst receiving portion of a predefined length. It results therefore that, if an adequate location is found for the catalyst receiving portion, detachable portions of the main pipe and corresponding joint members can be used along the rest of the main pipe, for instance in those locations in which detachable portions of reduced length may help in finding an appropriate shape for the main pipe. It has furthermore to be noted that, in the case of special motorcycles such as, for instance, off-road motorcycles, a predefined minimal distance or gap has to be left between the main exhaust gas pipe and the ground otherwise the motorcycle cannot adequately exploit the purposes for which it is designed.

In an attempt to meet as many as possible of the criteria and/or requirements outlined above, several solutions relating in particular to exhaust gas pipes have been proposed in recent years by the manufacturers of motorcycles. For instance, solutions have been suggested according to which the one or two catalysts are placed in the area in front of the engine; however, even if, on the one hand, with this solution it is possible to raise the activation temperature of the one or more catalysts within a short time after starting the engine, on the other hand, the problem arises that the resistance of the exhaust gas flow is increased, thus resulting in the output characteristics of the engine being negatively affected.

According to another solution known from Japanese Patent Application Laid-Open Publication No. 2007-23802, the main exhaust gas pipe is allowed to pass along a side of the engine and to extend toward the rear of the motorcycle, with the one catalyst being positioned on the side of said engine. However, even if it can be appreciated that according to this solution, the catalyst are not placed too far away from the combustion chamber so that, on the one hand, the time for reaching the activation temperatures is not unduly augmented and/or increased, on the other hand, other disadvantages arise, relating in particular to the design of the motorcycle. Moreover, the overall dimension of the motorcycle, in particular in the width direction, unduly decrease. This in particular due to the fact that the portion of the exhaust gas main pipe wherein the catalyst is located (the catalyst receiving portion) is larger in diameter than the portions of said main pipe located downstream and upstream with respect to said catalyst receiving portion. Accordingly, the overall width of the motorcycle unduly increases.

Further improvements of this solution have been proposed, according to which the catalyst (or even the two catalysts) is/are placed very close to the combustion chamber so a to leave adequate clearance between the catalysts and the legs of the driver and/or passenger. However, as stated above, when this solution is adopted, the temperature of the catalyst may rise excessively, in particular beyond the allowed activation temperature.

Further examples of exhaust gas apparatuses for motorcycles are known from EP1614613A, JP58220916, EP1921287A and EP1744025A.

Therefore, it results from the above, that in spite of all the efforts made, the solutions proposed in the past as known in the prior art do not meet the essential requirements which have to be taken into consideration during the design of a motorcycle and an exhaust gas apparatus for a motorcycle. In particular, the proposed solutions do not meet the need of an exhaust gas pipe offering good performance in terms of functionality and reliability of the catalysts, as well as in terms of the overall look, aerodynamics and reduced or contained dimensions of the motorcycle.

Accordingly, in view of the above, it is an object of the present invention to provide an exhaust gas purifying apparatus for motorcycles allowing to overcome or at least to drastically reduce the problems and/or drawbacks affecting prior art exhaust gas purifying apparatus. In particular, it is a further object of the present invention to provide said apparatus having an improved layout to allow for finding a convenient location for the catalyst receiving portion of the exhaust gas main pipe without unduly increasing the overall dimensions of the motorcycle, in particular without unduly increasing the overall dimension of the motorcycle in its width direction.

In general terms, the present invention is based on the consideration that the problems affecting the prior art exhaust gas pipes and/or apparatus may be overcome by providing an exhaust gas apparatus comprising a main exhaust gas pipe with at least a portion opportunely shaped and adapted to receive a corresponding catalyst at a convenient location along said main exhaust gas pipe. A further consideration on which the present invention is based relates to the fact that, if the catalyst is received in a part or portion of the main exhaust gas pipe which extend in the width direction of the motorcycle (from the one side toward the opposite side), then good performances of said catalyst are obtained without unduly increasing the overall dimension (in particular the width) of the motorcycle. In particular, further problems are overcome according to the present invention when the catalyst is received or located in a width-extending portion of the exhaust gas main pipe extending from a front-back extending portion (located on the side of the engine), with said width-extending portion passing behind or being located in the area behind the engine (when viewed from the side, or beyond the engine when viewed from the front of the motorcycle) . In fact, in this case, the clearance between the catalyst and the cylinder block can be opportunely selected so as to avoid the situation that the temperature of same increases beyond the allowed activation temperature. Moreover, the problem is avoided that the resistance of the exhaust gas flow increases, so that the output characteristics of the engine are not negatively affected.

Another important consideration on which the present invention is based relates to the fact that, with the catalyst received in the width-extending portion located behind the engine, the remaining portion of the exhaust gas main pipe extending between the engine and said width-extending portion can be adequately shaped, in particular can be realized so as to comprise as many sub portions as needed, said sub portions being joined by joint members without any limitations relating to the minimal length of these sub portions. Accordingly, the exhaust gas main pipe extending between the engine and the width-extending portion may be opportunely curved, bent or shaped so as to be located as close as needed to the engine or even between the engine and the tubes of the main frame of the motorcycle or even so as to occupy small spaces between the several component parts of the motorcycle. Evident advantages are therefore also obtained in terms of simplified assembly operations of the exhaust gas main pipe since the sub portions of reduced length can be assembled in sequence, with the main frame or even other component parts of the motorcycle such as for instance, the engine no longer representing an obstacle or disturbing the assembly operations. With the catalyst received in the width-extending portion located behind the engine it is also possible to place the muffler of the exhaust gas apparatus at least partially below or under the seat of the motorcycle and not on the side of the seat as is the case according to prior art solutions; this also allows to contain the overall dimensions, in particular, in the width direction, of the motorcycle. Moreover, the muffler can be fixed to the seat of the motorcycle with evident advantages in terms of improved stability of the muffler.

On the basis of the considerations as stated above, according to the present invention, the problems identified above affecting the prior art exhaust gas purifying apparatus are overcome or at least strongly reduced by means of the invention as claimed in independent claim 1.

Further embodiments of the present invention are laid down in the dependent claims. "' '

According to another embodiment described in claim 5, the motorcycle according to the present invention comprises a seat and an air cleaner and is characterized in that the air cleaner is located below the seat and above the catalyst, and in that a plate-shaped member is disposed between the air cleaner and the catalyst.

There is also disclosed a muffler comprising an over and an upper portion joined together by welding together flange portions formed at the peripheral edged portions of said upper and lower portions.

It is also possible to provide left and right covers of said muffler for covering left and right side faces of said muffler.

A heat shield may also be disposed between the muffler and the seat so as to inhibit heat from being transmitted from the muffler to said seat.

According to the present invention, the exhaust main pipe of the motorcycle comprises a vehicle width-extending portion. Still according to the present invention, the motorcycle is characterized in that the vehicle width-extending portion comprises a rectilinear catalyst receiving portion extending substantially horizontally and diagonally rearward as viewed from above the motorcycle, in that a buffer is disposed in an inclined state between the rear arm and the body frame with its upper portion facing toward the front of the motorcycle and in that the vehicle width-extending portion is located in a space between the buffer and the rear wheel.

Whilst the main advantages obtained by means of this solution have already been mentioned above, it may be pointed out once again that the main advantages relate to the fact that the overall dimensions of the motorcycle (in particular in the width direction) do not unduly increase, that the gas flow resistance does not negatively affect the output of the engine, that the activation temperature is still reached quickly, that the catalyst does not become overheated and that the assembly operations of the exhaust gas main pipe are simplified.

Further advantages, objects and features as well as embodiments of the present invention are defined in the independent claims and will become more apparent with the following detailed description when taken with reference to the accompanying drawings, in which identical or corresponding parts are identified by the same reference numerals. In particular, in the drawings:
FIG. 1 relates to a side view from the left of a motorcycle according to an embodiment of the present invention;
FIG. 2 relates to a further side view of the motorcycle of Figure 1 depicting in detail the main frame of said motorcycle and an engine mounted on said body frame;
FIG. 3 relates to a side view of an exhaust gas system connected to the engine;
FIG. 4 is an exploded perspective view of the exhaust system.
FIG. 5 relates a top view of the exhaust system of Figure 4;
FIG. 6 relates to a back view of the exhaust system of Figures 4 and 5;
FIG. 7 relates to a top view of the muffler of the exhaust system of Figures 4 to 6;
FIG. 8 relates to a cross-sectional view taken along a line VIII-VIII in FIG. 7 of a portion of the muffler of Figure 7;
FIG. 9 relates to a cross-sectional view taken along a line IX-IX in FIG. 7 of said portion of the muffler of Figure 7.
FIG. 10 relates to a cross-sectional view taken along a line X-X in FIG. 7 of said portion of the muffler of Figure 7.
FIG. 11 relates to a cross-sectional view taken along a line XI-XI in FIG. 7 of said portion of the muffler of Figure 7.
FIG. 12 relates to a cross-sectional view taken along a line XII-XII in FIG. 3 of an exhaust pipe of the exhaust system.

While the present invention is described with reference to the embodiments as illustrated in the following detailed description as well as in the drawings, it should be understood that the following detailed description as well as the drawings are not intended to limit the scope of the present invention to the particular illustrated embodiments disclosed and/or depicted therein, but rather that the described illustrated embodiments merely exemplify the various aspects of the present invention, the scope of which is defined by the appended claims.

The present invention is understood to be of particular advantage when applied to two wheeled motorcycles, such as, for instance, motorbikes. For this reason, examples will be given in the following, in which corresponding embodiments of the exhaust gas purifying apparatus according to the present invention are applied to motorcycles. However, it has to be noted that the applications of the exhaust gas purifying apparatus according to the present invention are not limited to the case of motorbikes; on the contrary, the exhaust gas purifying apparatus according to the present invention may also be applied to other motorcycles, in particular, to three or even four wheeled motorcycles such as, for instance, choppers, quads or the like.

In the following, some details and features of the exhaust gas purifying apparatus or system according to the present invention will be described with reference to the drawings wherein corresponding or equivalent features are identified by corresponding reference numerals. Moreover, in both the drawings and the following disclosure, terms such as, for instance, front, rear, left and right have to be understood as meaning respectively front, rear, left and right as used from the perspective of the person sitting on the motorcycle implementing the present invention. Moreover, in the following description, two identical reference numerals are used for identifying "left and right" component parts, even if only one of said two components parts is depicted in the drawings; for instance, if the description refers to a right and a left cover, with only the left cover being depicted in the drawings, said left and right covers are identified by indicating the same reference numerals twice; in the same way, when the description refers to a component part identified by two identical reference numerals (for instance 19, 19), the description has to be understood as meaning that a left and a right component part are provided.

In the drawings, reference numeral 1 relates to a motorcycle implementing the exhaust gas purifying apparatus according to the present invention; in particular, in the drawings there is depicted an off-road motorcycle. However, it appears clearly from the following disclosure that the applications of the exhaust gas purifying apparatus according to the present invention are not limited to the case of off-road motorcycles but comprise any kind of motorcycles.

The motorcycle 1 comprises a main frame 2, an engine 3 mounted on the body frame 2, an exhaust gas system 4 extending from said engine 3 and an air intake system 9 connected to the engine 3.

The motorcycle 1 further comprises rear arms 5, 5 pivotally connected to the body frame 2 and rotatably supporting a rear wheel 12 on a rear end portion thereof; a rear wheel suspension system 6 is disposed between the rear arms 5,5 and the body frame 2.

Moreover, the motorcycle 1 comprises a front fork 8 supported by a head pipe 7 to be steered leftward and rightward, said head pipe 7 being positioned at a front end portion of the body frame 2; a fuel tank 10 is mounted at the front end portion of the body frame 2, and a seat 11 is mounted behind the fuel tank 10.

A front wheel 13 is rotatably supported on lower end portions of the front fork 8 and a steering handlebar 14 is fixed to an upper end portion of the front fork 8.

The motorcycle 1 further comprises an exterior cover 15 covering an essential or substantial portion of the vehicle body. The exterior cover 15 comprises in particular left and right front side covers 15a, 15a covering a front portion of the main frame 2 along with left and right side faces of the fuel tank 10; said left and right covers 15a, 15a work as an air scoop for guiding air so as to flow against the engine 3. Left and right rear side covers 15b, 15b cover a lower portion of the seat 11, whilst a rear cover 15c is provided so as to be adjacent or contiguous to the left and right rear side covers 15b so as to cover a rear upper portion of the seat 11.

The body frame 2 (in the following also referred to as main frame) comprises the head pipe 7, left and right main tubes 16, 16 extending rearward and diagonally downward from an upper portion of the head pipe 7 while extending apart outward in a vehicle width direction, along with a down tube 17 extending substantially linearly, downward, and rearward, from a lower portion of the head pipe 7.

The left and right main tubes 16, 16 comprise tank rail portions 16a, 16a respectively, supporting the fuel tank 10 and rear-arm bracket portions 16b, 16b respectively, to which front end portions of the rear arms 5, 5 are pivotally connected by means of a pivot shaft 18. A radiator 21 is mounted on a front .portion of the down tube 17.

Moreover, the main frame 2 comprises left and right seat rails 19, 19 extending rearward and substantially linearly from rear end portions of the left and right tank rail portions 16a, 16a, along with left and right seat tubes 20, 20 connecting midway portions of the left and right rear-arm bracket portions 16b, 16b and rear portions of the seat rails 19, 19.

The seat 11 is detachably mounted on the left and right seat rails 19, 19. A front portion 11 a of the seat 11 is formed so as to extend to cover an upper face of a rear portion of the fuel tank 10.

The rear arms 5, 5 comprise left and right arm portions 5a, 5a extending in a front-back direction and a cross portion 5b connecting midway portions of the left and right arm portions 5a, 5a.

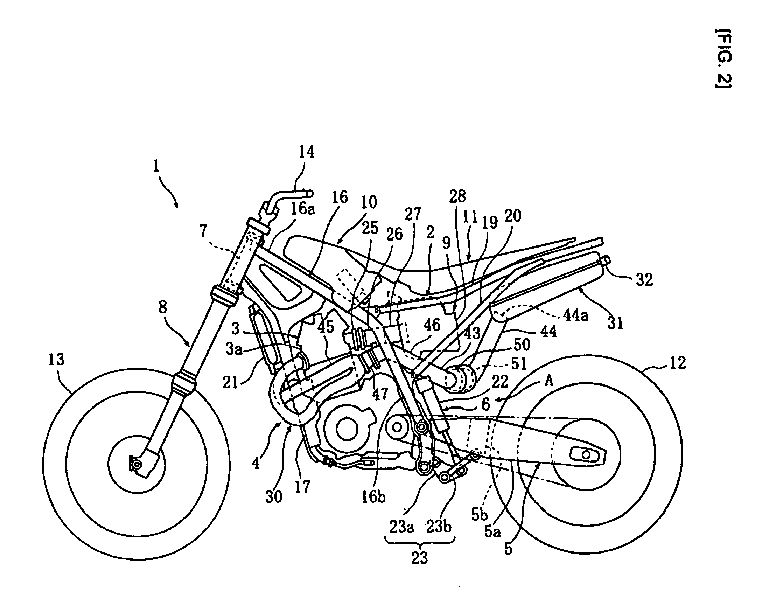

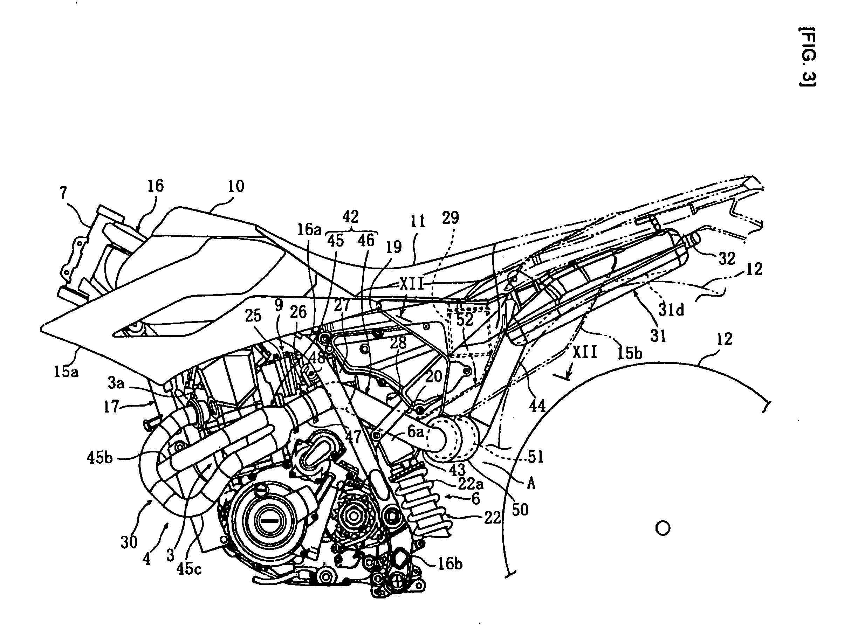

The rear wheel suspension system 6 comprises a buffer 22 and a linkage mechanism 23. The buffer 22 is located in the space which is defined, in the width direction of the motorcycle 1, by the left and right arm portions 5a, 5a this space being further defined, in the front-back direction of the motorcycle, by the pivot shaft 18 and by the cross portion 5b which extends in the width direction and connects left and right arm portions 5a, 5a; moreover, the buffer 22 is located substantially at the center of this space in the vehicle width direction. As apparent, in particular from Figures 2 and 3, the buffer 22 is located close to the rear-arm bracket portions 16b, 16b of the left and right main tubes 16, 16 and extends substantially parallel to said rear-arm bracket portions 16b, 16b i.e. the buffer is inclined forward in the counterclockwise direction with the upper portion of the buffer being inclined toward the front of the motorcycle as viewed from a lateral side of the vehicle. Although a buffer 22 comprising a coil spring 22a has been depicted in the drawings, it appears clearly that also different buffers (for instance hydraulic or pneumatic buffers) can be used and/or implemented according to the present invention.

The linkage mechanism 23 comprises a triangular first link 23a connected to the lower end portions of the left and right rear-arm bracket portions 16b, 16b, said linkage mechanism 23 further comprising a rod-shaped second link 23b connecting the first link 23a and the cross portion 5b which connects the rear arms 5, 5. The lower end portion of the buffer 22 is connected to the first link 23a whilst the upper end portion of the buffer 22 is connected to a bridge portion interposed between the left and right rear-arm bracket portions 16b, 16b.

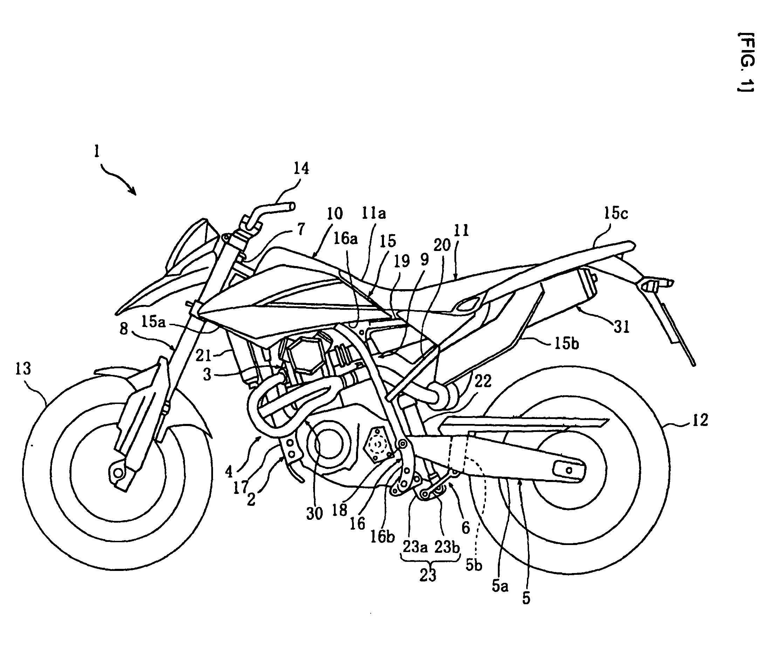

Still with reference to Figures 1 to 3, it appears that the engine 3 is located between the left and right main tubes 16, 16 and the down tube 17. For instance, said engine may be a water-cooled-4-cycle single-cylinder engine; however, within the scope of the present invention, other engines can be used such as, for instance, multiple-cylinder engines and/or air-cooled engines.

The motorcycle 1 further comprises an air intake system 9 connected to a rear wall of the cylinder head 3a of the engine 3. Said air intake system 9 comprises a throttle body 26 connected to an intake port open in the rear wall of said cylinder head 3a by a joint member 25 and an air cleaner 28 is connected to the throttle body 26 by an intake duct 27.

The air cleaner 28 is located below or under the seat 11, the upper portion of said air cleaner 28 being located between the left and right seat rails 19, 19. A battery 29 is disposed below or under the seat 11 and behind the air cleaner 28.

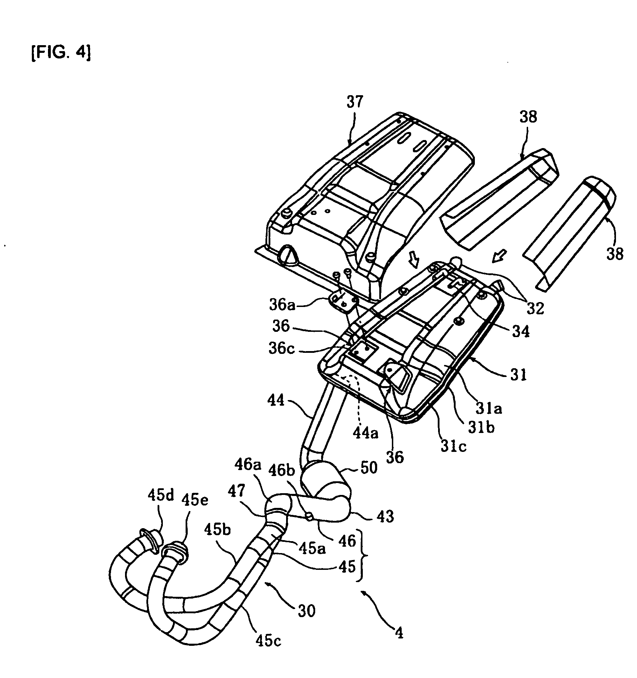

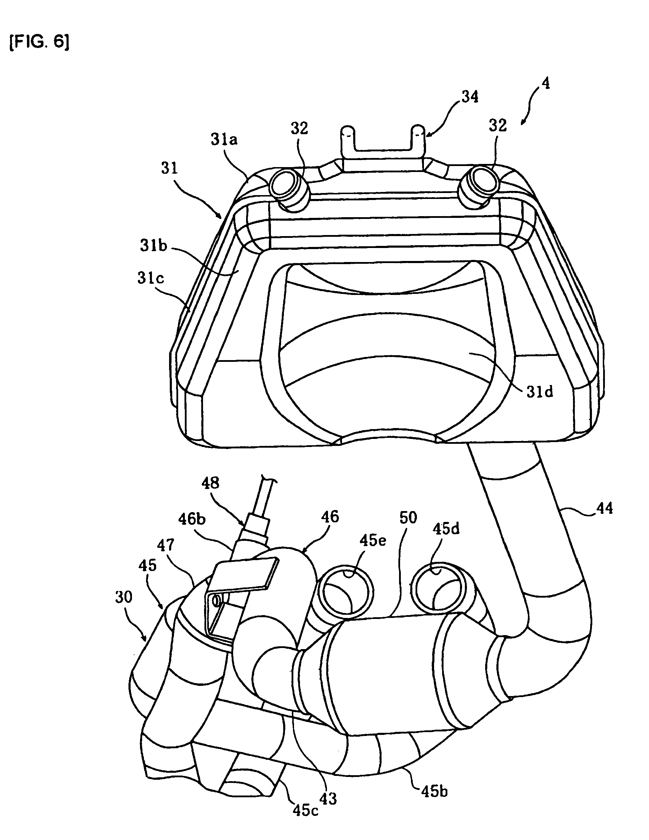

In the following, with reference to Figures 4 to 12, further details and features of the exhaust gas system according to an embodiment of the present invention will be described. In Figures 4 to 12, those features already described above with reference to previous figures are identified by the same reference numerals.

As apparent in particular from Figures 4 to 5, the exhaust gas system 4 extends from a front wall of the cylinder head 3a of the engine 3; in particular, the exhaust gas system 4 comprises an exhaust gas main pipe 30 connected to an exhaust gas port open in the front wall of the cylinder head 3a and a muffler 31 connected to a downstream end portion of the exhaust gas main pipe 30.

The muffler 31 is located substantially below or under a rear portion of the seat 11; moreover, said muffler 31 is in a box shape and comprises an upper member 31 a and a lower member 31b joined together. For instance, the upper member 31a and the lower member 31b may be joined together by welding together flange portions 31c formed at peripheral edge portions of the members 31a and 31b. However, depending on the needs and/or circumstances, other solutions may be adopted for joining together the members 31a and 31b. For instance, screws, clips or the like may be used.

A pair of left and right tail pipes 32, 32 extend from the rear end wall of the muffler 31; moreover, said tail pipes 32, 32 are slightly rotated or oriented so as to face diagonally outward in the vehicle with direction. A bottom portion of the lower member 31b of the muffler 31 comprises a concave portion 31d for avoiding interference with an upper end portion of the rear wheel 12 during compression of the buffer 22.

Left and right covers 38, 38 are provided for covering and/or protecting left and right side faces of the muffler 31, respectively; moreover, a heat shield plate 37 is provided, said heat shield plate 37 being located between the muffler 31 and the left and right covers 38. In this way, it is avoided that heat coming from the muffler 31 is transmitted to the seat 11.

As apparent from Figures 4 to 8 and 10, the muffler 31 comprises a support member 34 extending from the upper member 31a (from the upper face thereof) so as to face upwards, along with fastening members 36, 36; the support member 34 is adapted to be inserted from behind into a rear support portion 33 fixed to the main frame 2; the fastening members 36, 36a are adapted to be fixed to left and right front support portions 35, 35, respectively, also belonging to the main frame 2. In particular, the muffler 31 is fixed to the main frame 2 as follows.

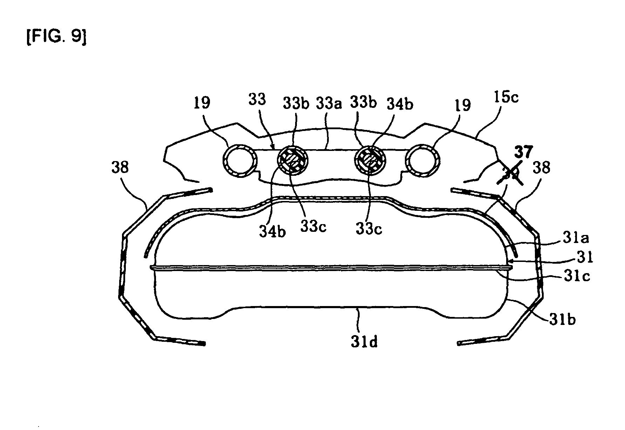

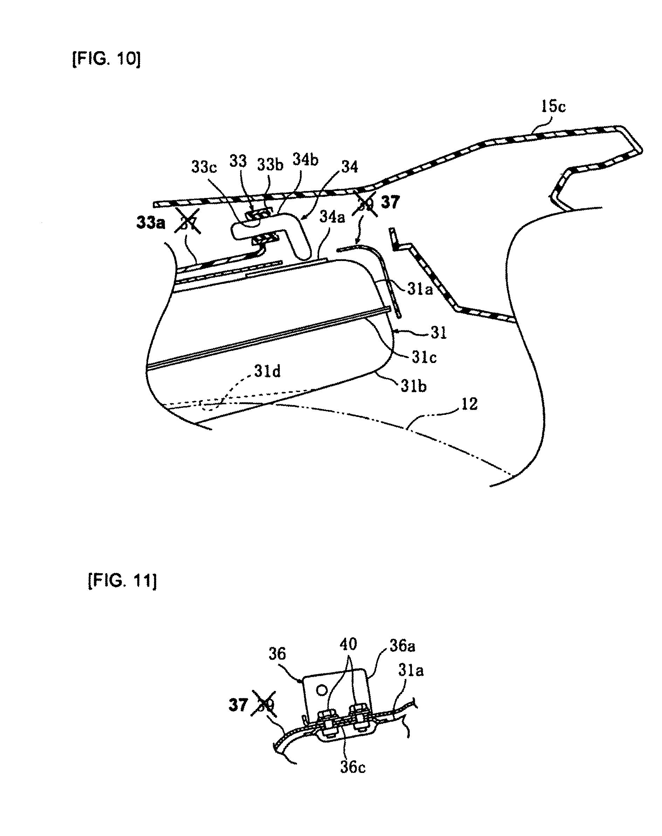

The rear support portion 33 comprises a L-shaped support plate 33a (see in particular figures 9 and 10) connected like a bridge between rear end portions of the left and right seat rails 19, 19; moreover, the support portion 33 comprises left and right cylindrical grommets 33b, 33b connected to the support plate 33a (to the portion thereof extending upwards). In particular, the left and right grommets 33b, 33b are oriented so that their insertion holes 33c, 33c are oriented in the front-back direction of the motorcycle.

The support member 34 comprises a base portion 34a fixed to a rear end portion of the upper member 31 a of the muffler 31, along with left and right insertion portions 34b, 34b, with said insertion portions 34b, 34b extending from the base portion 34a and being bent forward. The insertion portions 34b, 34b are therefore L-shaped, with a first portion extending substantially perpendicularly from the base portion 34a and a second portion extending substantially perpendicularly from said first portion and facing toward the front of the vehicle.

With respect to the left and right front support portions 35,35 it appears from figures 4 to 8 and 10 that each of said left and right front support portions 35, 35 comprises a bracket 35b, 35b connected like a bridge between the corresponding seat rail 19 and the seat stay 20 and extending in a direction substantially vertical; the left front support portion 35 extends therefore between the left seat rail 19 and the left seat stay 20 whereas the right front support portion 35 extends between the right seat rail 19 and the right seat stay 20. Moreover, each one of the left and right front support portions 35, 35 comprises a cylindrical body 35a, 35a disposed with its axis oriented in the vehicle with direction. A collar 35d, 35d is inserted into the cylindrical body 35a, 35a of each of the left and right front support portions 35, 35 with a damper 35c, 35c interposed therebetween. Each of the left and right collars 35d, 35d is located so as to be positioned between the corresponding seat rail 19 and the seat stay 20.

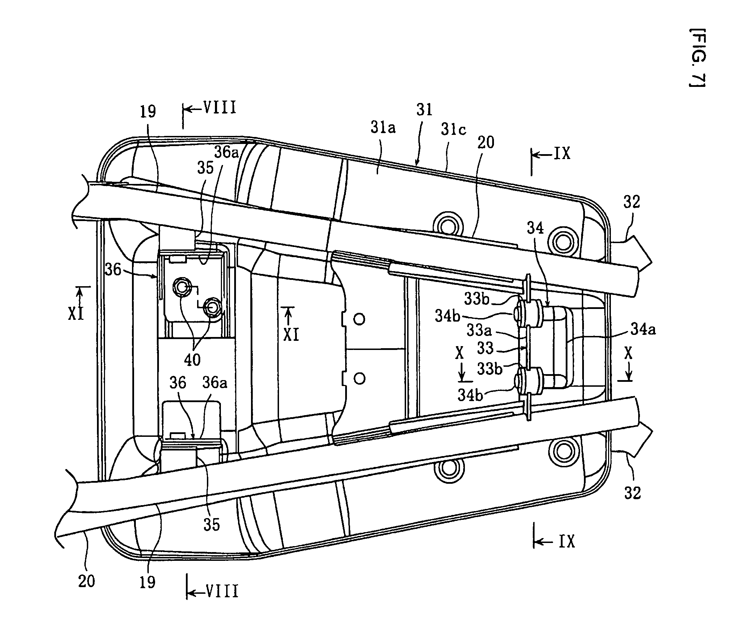

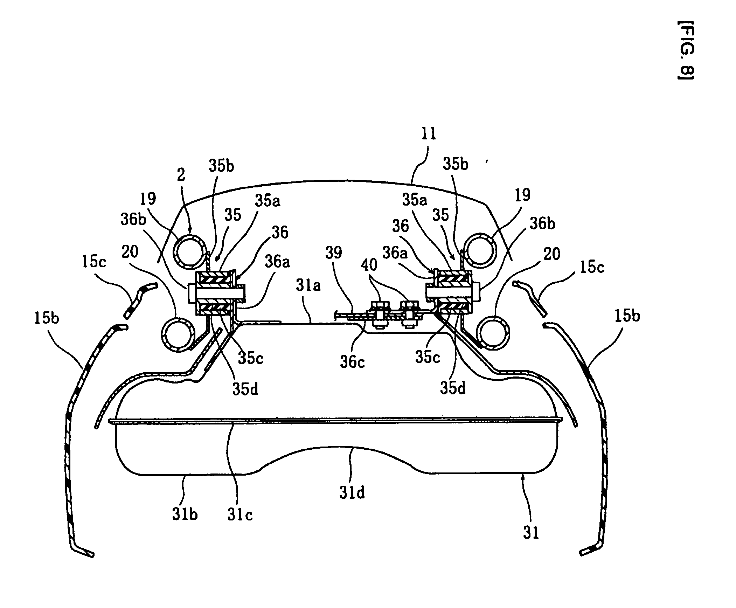

The left and right fastening members 36, 36 (see in particular Figures 7 and 8) comprise substantially L-shaped fastening plates 36a, 36a with a first portion thereof protruding upward and adapted to be fixed to the front support portions 35, 35 respectively, by means of fastening bolts 36b, 36b, along with second portions fixed to left and right front end portions of the upper member 31 a, 31 a (of the upper face thereof), respectively.

In particular, the right fastening plate 36a (see in particular Figures 8 and 11) is fixed, by means of two bolts 40, 40, to a plate 36c mounted on the upper member 31 a (on the upper face thereof) with the heat shield plate 37 sandwiched therebetween. The assembly of the muffler 31 to the seat 11 is therefore carried out as follows.

The left and right insertion portions 34b, 34b of the support member 34, are inserted into the left and right cylindrical grommets 33b, 33b of the rear support portion 33, respectively; to this end, the muffler 31 is displaced toward the front of the vehicle. It has also to be noted that the heat shield plate 37 (see Figures 4 and 10) comprises holes adapted to receive the left and right insertion portions 34b, 34b, respectively. In this way, the heat shield plate 37 is sandwiched between the muffler 31 and seat 11. As a result of the insertion of the left and right insertion portions 34b, 34b into the corresponding left and right cylindrical grommets 33b, 33b the fastening members 36, 36 are brought into correspondence with the left and right front support portions 35, 35, respectively; in particular, the portions of the fastening plates 36a, 36a extending upward are brought into correspondence with the cylindrical bodies 35a, 35a (of the collars 35b received therein) so that it is possible to insert the fastening bolts 36b, 36b from outside into the collars 35d, 35d and into corresponding holes of the plates 36a, 36a so as to fix said plates 36a, 36a and therefore the muffler 31, to the collars 35d, 35d.

In the following, with reference to Figures 4 to 12, further details and/or features of the exhaust gas system according to an embodiment of the present invention will be described; as usual, those details and/or features already described with reference to previous figures are identified by the same reference numbers.

As apparent in particular from Figures 4 to 6, the exhaust gas main pipe 30 comprises a front-back extending portion 42 extending in the front-back direction on the left side of the engine 3; moreover, the exhaust gas main pipe 30 comprises a vehicle-width extending portion 43 extending from a downstream end portion of the front-back extending portion 42 toward the right side (the opposite side) in the vehicle with direction. Moreover, the exhaust main pipe 30 comprises an upward extending portion 44 extending upward and slightly rearward from a downstream end portion of the vehicle-width extending portion 43.

The front-back extending portion 42 comprises a front portion 45 and a rear portion 46, said rear portion 46 being located substantially behind the engine 3 (on the right thereof when viewed from the left of the motorcycle). A rear end portion 45a of the front portion 45 and a front end portion 46a of the rear portion 46 are detachably connected by means of a joint member 47.

The rear portion 46 extends from the joint member 47 and prosecutes running through inside the left rear-arm bracket portion 16b to extend rearward and downward between an upper portion of the buffer 22 and the left seat stay 20 (see Figure 3).

A portion of the rear portion 46 downstream from and close to the joint member 47 is formed with an attachment hole 46b open upward and an oxygen sensor 48 for detecting oxygen concentration in the exhaust gas is attached to the attachment hole 46b.

The oxygen sensor 48 is located substantially in front of the left rear-arm bracket portions 16b of the main left tube 16 and behind the cylinder head 3a to overlap with the throttle body 26 as viewed from a lateral side of the vehicle. In this way, the oxygen sensor 48 is located in such a position that it can be seen from a lateral side of the vehicle, can be maintained without interfering with the left main tube 16, and is less likely to be affected by heat coming from the engine 3.

The front portion 45 comprises an upper first exhaust pipe portion 45b and a lower second exhaust pipe portion 45c joined together at their rear end portions 45a.

The first exhaust pipe portion 45b extends substantially linearly forward and downward from the join portion 45a and bends to surround a front portion of the down tube 17 of the main frame 2.

The second exhaust pipe portion 45c extends forward and downward from the join portion 45a and bends upward to form a substantially semicircular shape on the left side of the down tube 17.

Upstream ports 45d, 45e of the first and second exhaust pipe portions 45b, 45c are connected to the front wall of the cylinder head 3a. Exhaust ports open on the front wall are formed by dividing one exhaust opening formed in the cylinder head 3a into two and leading them out; the first and second exhaust pipe portions 45b, 45c are connected to the respective exhaust ports.

The vehicle-width extending portion 43 extending from the rear portion 46 runs through a space A behind the engine 3; said space A may be considered as being defined by the engine 3 in particular by the buffer 22 and the rear wheel 12; i.e. said portion 43 extends rightward in the vehicle width direction. In particular, said space A may be regarded as being defined and/or limited by the engine 3 or even the buffer 22 and the rear wheel 12 in the front back direction, by the rear arms 5 in the width direction and by said rear arms 5 and the air cleaner 28 in the upward direction.

The vehicle-width extending portion 43 behind the engine 3 extends substantially horizontally in the vehicle width direction and extends diagonally rearward as viewed from above the vehicle. Along the vehicle-width extending portion 43 substantially at the center thereof there is formed a catalyst receiving portion 50 having a larger diameter than the vehicle-width extending portion 43, a catalyst 51 for purifying exhaust gas being received in said catalyst receiving portion 50.

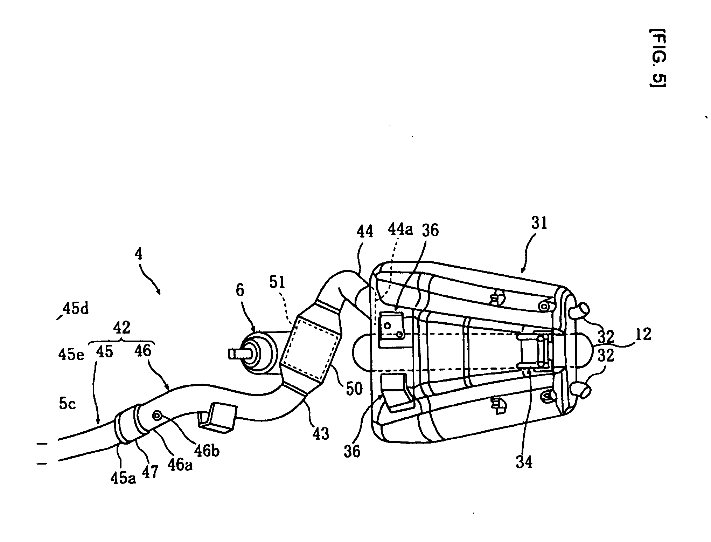

The catalyst receiving portion 50 is located so as to overlap with the buffer 22 and more specifically with a lower half portion of the buffer 22 as viewed from above the vehicle or motorcycle (see FIG. 5).

The catalyst receiving portion 50 is substantially in the same vertical position as an upper portion 6a of the buffer 22 and more specifically in a higher vertical position than a coil spring 22a of the buffer body 22 (see FIG. 3).

Accordingly, the space in proximity of said buffer is conveniently used for locating the catalyst 51 or even the catalyst receiving portion 50; in particular, this is due to the fact that the upper portion 6a of the buffer 22 is smaller in diameter due to lack of the coil spring 22a.

Moreover, because the vehicle-width extending portion 43 is disposed in the same vertical position as the upper portion 6a of the buffer 22 disposed so as to be inclined forward and to overlap with the buffer 22 as viewed from above the vehicle, it is easy to secure the space for disposing the catalyst housing portion 50 and it is possible to dispose the catalyst housing portion 50 in a space-saving manner.

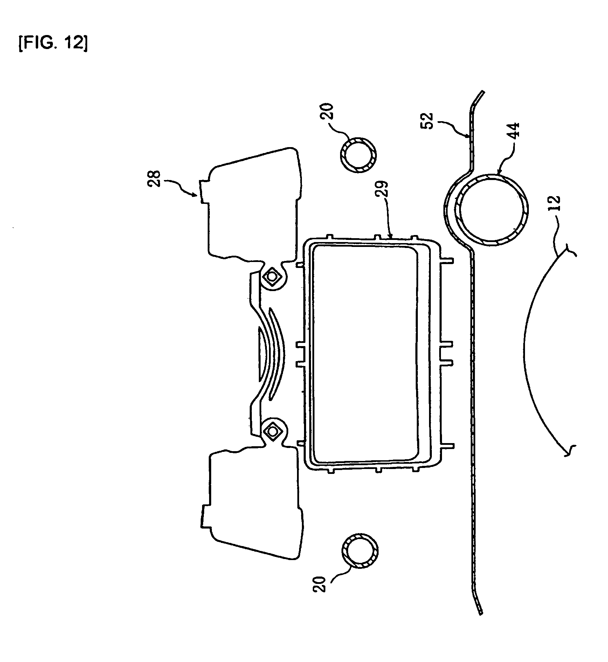

A plate-shaped member 52 having a heat-shielding function is disposed between the catalyst receiving portion 50 and the air cleaner 28. The plate-shaped member 52 is formed to be wide to cover the vehicle-width extending portion 43 and the upward extending portion 44 and extends upward to be positioned between the upward extending portion 44 and the battery 29 (see FIGS. 3 and 12).

The upward extending portion 44 contiguous to the vehicle-width extending portion 43 extends rearward, diagonally upward, and linearly between the buffer 22 and the rear wheel 12 in the space A and behind the battery 29. A downstream port 44a of the upward extending portion 44 is connected to a right end portion in the vehicle width direction of a front wall portion of the muffler 31.

It results therefore from the above that, according to the present invention, once the exhaust gas system has been mounted on the motorcycle 1, the width-extending portion 43 (inside of which the catalyst 51 is received) of the exhaust main pipe 30 is located substantially in correspondence with the vertical plane of symmetry of the motorcycles with portions of said catalyst receiving portion 50 located on opposite sides of said plane of symmetry. Moreover, said width-extending portion 43 is located in a space behind the engine, said space being defined, in the front-back or longitudinal direction of the motorcycle, by the engine 3 (or even by the rear buffer 22) and the rear wheel 12 of said motorcycle. With the catalyst 51 received inside said width-extending portion (or even in said catalyst receiving portion 50), said catalyst 51 result to be conveniently located so that at least 2 relevant needs are met: on the one hand, the space A between the engine and the rear wheel, which is usually empty or wherein usually no component parts of the motorcycle are received is conveniently used; moreover, the dimensions of the motorcycle in the width direction are not unduly increased. Moreover, with the vehicle-width extending portion 43 of the main pipe 30 located in the space A defined by the engine 3 and the rear wheel 12 so as to extend from the left side (one side) to the right side (the opposite side) and in particular with a catalyst 51 received in said vehicle-width extending portion 43 further advantages in terms of improved performance of the catalyst 51 are obtained; in fact, the catalyst does not get overheated due to the heat generated by the engine (the catalyst can work at the activation temperature) and the resistance of the exhaust gas flow is not unduly increased so that the output characteristics of the engine are not negatively affected. Moreover, with the vehicle-width extending portion 43 extending substantially horizontally and diagonally rearward and in particular with the catalyst 51 received in the catalyst receiving potion 50 of said vehicle-width extending portion, the space A between the engine 3 and the rear wheel 12 is usefully used; in particular, this space A is not entirely occupied by said vehicle-width extending portion 43 and said catalyst receiving portion 51 so that the assembly operations of the exhaust gas system are simplified and speded up with corresponding advantages in terms of reduced assembly costs.

Moreover, the plate-shaped member 52 functioning as the heat shield plate can be disposed between the air cleaner 28 located above the catalyst receiving portion 50 and the catalyst housing portion 50. Therefore, even if the air cleaner 28 is disposed above the catalyst 51, the clearance between the air cleaner 28 and the catalyst 51 may be maintained as small as needed without any risk of the air cleaner becoming overheated due to the heat emitted by the catalyst 51. As a result, even restrictions as to the position of the seat 11 that is mounted above the air cleaner 28 are overcome. Therefore, it is possible to meet a design request for a substantially horizontal line from the fuel tank 10 to the seat 11. Furthermore, a bottom face of the air cleaner 28 can be brought close to the catalyst 51 and it is possible to secure a necessary capacity of the air cleaner 28 without increasing height of the seat.

According to a further embodiment, an upward extending portion 44 extending rearward and diagonally upward from the vehicle-width extending portion 43 and connected to the muffler 31 is provided. Therefore, it is possible to secure necessary length of the exhaust pipe.

According to a further embodiment, the muffler 31 is supported by the body frame 2 by means of the support member 34 inserted in the vehicle front-back direction into the rear support portion 33 belonging to the body frame 2 and the fastening members 36 fastened in the vehicle width direction to the front support portions 35 also belonging to the body frame 2. Therefore, simply inserting the support member 34 forward from behind and fastening the support member 34 with the fastening members 36 from outside in the vehicle width direction is required for mounting the muffler 31, thereby facilitating mounting the muffler 31 on the body frame 2.

The exhaust pipe 30 comprises a front-back extending portion 42 extending in the vehicle front-back direction on the left side of the engine 3 with said front-back extending portion 42 further comprising front and rear portions. Therefore, the exhaust pipe 30 can be mounted in the same direction as the direction in which the muffler 31 is inserted, which facilitates mounting the exhaust pipe 30.

Moreover, since the catalyst housing portion 50 is disposed to overlap with the buffer 22 inclined forward as viewed from above the vehicle, it is possible to dispose the catalyst housing portion 50 in a space-saving manner. In this case, by disposing the catalyst housing portion 50 on the front side of the vehicle in the space A, it is possible to displace the rear wheel 12 forward to thereby shorten a wheel base.

It arises therefore from the above disclosure that the present invention allows for overcoming or at least for strongly reducing the prior art gas systems. In particular, with the present invention, evident advantages in terms of improved functionality of the catalyst as well as in terms of contained dimensions and improved overall look and appearance as well as aerodynamics of the motorcycle are obtained.

While the present invention has been described with reference to the particular embodiments depicted in the drawings, it has to be understood that the present invention is not limited to the particular embodiments described. For instance, while the embodiment of the present invention has been described above according to which the vehicle-width extending portion 43 of the exhaust main pipe is located in the space A between the engine 3 and the rear wheel 12 (or even between the rear buffer and the rear wheel 12) so as to extend substantially horizontally, with said vehicle-width extending portion 43 comprising the catalyst receiving portion 50, it has to be noted that the present invention also comprises the embodiment according to which the catalyst receiving portion 50 extends substantially vertically; in this case, further advantages in terms of contained or reduced dimension of the vehicle body (in particular in the vehicle width direction) are obtained. Moreover, even if the present invention has been described with reference to the embodiment according to which the main pipe 4 (in particular the front and back portions 45, 46 thereof) extends from the engine along the left side of the engine, with the vehicle-width extending portion 43 and/or the catalyst receiving portion 50 extending from the left side to the right side, the present invention also comprises the embodiment according to which the main pipe 4 extends from the engine 3 on the right side thereof; in this case, the vehicle-width extending portion 43 and the catalyst receiving portion 50 extend from the right side to the left side.

The scope of the present invention is therefore defined by the appended claims.

## Claims

1. A motorcycle (1) comprising a body frame (2), an engine (3) supported by said body frame (2), an exhaust gas system (4) comprising an exhaust gas main pipe (3) extending from said engine (3) and a muffler (31) connected to said exhaust gas main pipe (30);
said motorcycle (1) further comprising a rear arm (5) pivotally connected to said body frame (2) and comprising a rear end portion on which a rear wheel (12) is supported, said motorcycle (1) further comprising a buffer (22) disposed between said rear arm (5) and said body frame (2) and behind said engine (3);
wherein said exhaust gas main pipe (30) comprises a front-back extending portion (42) extending rearward on one side of the engine in a vehicle front-back direction; said exhaust gas main pipe (30) comprising a vehicle-width extending portion (43) extending from said front-back extending portion (42), passing behind said engine (3) and extending to the opposite side; **characterized in that** said vehicle width-extending portion (43) comprises a rectilinear catalyst receiving portion (50) extending substantially horizontally and diagonally rearward as viewed from above the motorcycle, **in that** a catalyst (51) is received in said catalyst-receiving portion (50),**in that**, said buffer (22) is disposed in an inclined state between said rear arm (5) and said body frame (2) with its upper portion facing toward the front of the motorcycle and **in that** said vehicle-width extending portion (43) is located in a space comprised between said buffer (22) and said rear wheel (12).

2. A motorcycle according to claim 1,
**characterized in that**, said vehicle-width extending portion (43) is located in a space defined in the front-back direction of said motorcycle (1) by said buffer (22) and said rear wheel (12), said space being limited at the bottom by said rear arm (12).

3. A motorcycle according to any of claim 1 to 2,
**characterized in that**, said vehicle-width extending portion (43) is positioned substantially in the same vertical position as an upper portion of said buffer (22).

4. A motorcycle according to claim 3,
**characterized in that** said vehicle-width extending portion (43) at least partially overlaps with said buffer as viewed from above a vehicle.

5. A motorcycle according to any of claims 1 to 4,
said motorcycle further comprises a seat (11) mounted on said body frame (2) and an air cleaner (28),
**characterized in that** said air cleaner (28) is located below said seat (11) and above said catalyst (51), and **in that** a plate-shaped member (52) is disposed between said air cleaner (28) and said catalyst (51).

6. A motorcycle according to any of claims 1 to 5,
wherein said exhaust gas main pipe (30) comprises an upward extending portion (44) extending upward from said vehicle-width extending portion (43), and in that said upward extending portion (44) is at least partially positioned between said buffer (22) and said rear wheel (12) as viewed from a lateral side of said motorcycle (1).

7. A motorcycle according to any of claims 1 to 6,
**characterized in that** said front-back extending portion (42) comprises a front portion (45) and a rear portion (46) joined to each other by means of a joint member (47)

8. A motorcycle according to any of claims 1 to 7,
**characterized in that** said muffler (31) comprises a support member (34) adapted to be inserted in a vehicle front-back direction into a support portion (33) of said main frame (2).

9. A motorcycle as claimed in any of claims 1 to 8,
further **characterized in that**, said muffler (31) further comprises fastening members adapted to be fastened in the vehicle width direction to support portions (35) of said body frame (2).

## Patentansprüche

1. Motorrad (1), enthaltend einen Rahmen (2), eine Maschine (3), die in dem Rahmen (2) aufgehängt ist, und ein Abgassystem (4), das eine Abgashauptrohrleitung (3), die sich von der Maschine (3) erstreckt, und einen Schalldämpfer (31) enthält, der mit der Abgashauptrohrleitung (30) verbunden ist;
wobei das Motorrad (1) weiterhin einen hinteren Schwingarm (5) enthält, der mit dem Rahmen (2) schwenkbar verbunden ist und einen hinteren Endabschnitt enthält, an dem ein Hinterrad (12) aufgehängt ist, wobei das Motorrad (1) weiterhin einen Stoßdämpfer (22) aufweist, der zwischen dem hinteren Schwingarm (5) und dem Rahmen (2) sowie hinter der Maschine (3) angeordnet ist;
wobei die Abgashauptrohrleitung (30) einen sich von vorne nach hinten erstreckenden Abschnitt (42) enthält, der sich rückwärtig auf einer Seite der Maschine in einer Richtung des Fahrzeugs von vorne nach hinten erstreckt; und die Abgashauptrohrleitung (30) einen sich in Fahrzeugbreite erstreckenden Abschnitt (43) aufweist, der sich von dem sich von vorne nach hinten erstreckenden Abschnitt (42) erstreckt, hinter der Maschine (3) vorbeiläuft und zur gegenüberliegenden Seite verläuft; **dadurch gekennzeichnet, dass** der sich in Fahrzeugbreite erstreckende Abschnitt (43) einen geradlinigen KatalysatorAufnahmeabschnitt (50) enthält, der sich im wesentlichen horizontal und diagonal rückwärtig erstreckt, wenn das Motorrad von oben betrachtet wird, **dadurch**, dass ein Katalysator (51) in dem Katalysatoraufnahmeabschnitt (50) aufgenommen ist, **dadurch**, dass der Stoßdämpfer (22) in einem geneigten Zustand zwischen dem hinteren Schwingarm (5) und dem Rahmen (2) angeordnet ist, wobei sein oberer Abschnitt der Vorderseite des Motorrades zugewandt ist, und **dadurch**, dass der sich in Fahrzeugbreite erstreckende Abschnitt (43) in einem Zwischenraum angeordnet ist, der sich zwischen dem Stoßdämpfer (22) und dem Hinterrad (12) befindet.

2. Motorrad nach Anspruch 1, **dadurch gekennzeichnet, dass** der sich in Fahrzeugbreite erstreckende Abschnitt (43) in einem Zwischenraum angeordnet ist, der in der Vorwärts-Rückwärts-Richtung des Motorrades (1) durch den Stoßdämpfer (22) und das Hinterrad (12) definiert ist, wobei der Zwischenraum auf der Unterseite durch den hinteren Schwingarm (12) begrenzt ist.

3. Motorrad nach einem der Ansprüche 1 bis 2, **dadurch gekennzeichnet, dass** der sich in Fahrzeugbreite erstreckende Abschnitt (43) im wesentlichen in derselben vertikalen Position angeordnet ist, wie ein oberer Abschnitt des Stoßdämpfers (22).

4. Motorrad nach Anspruch 3, **dadurch gekennzeichnet, dass** der sich in Fahrzeugbreite erstreckende Abschnitt (43) wenigstens teilweise mit dem Stoßdämpfer überlappt, wenn das Fahrzeug von oben betrachtet wird.

5. Motorrad nach einem der Ansprüche 1 bis 4, wobei das Motorrad weiterhin einen Sitz (11), der auf dem Rahmen (2) angebracht ist, und einen Luftfilter (28) enthält,
**dadurch gekennzeichnet, dass** sich der Luftfilter (28) unter dem Sitz (11) und über dem Katalysator (51) befindet, und **dadurch**, dass ein plattenförmiges Element (52) zwischen dem Luftfilter (28) und dem Katalysator (51) angeordnet ist.

6. Motorrad nach einem der Ansprüche 1 bis 5, bei dem die Abgashauptrohrleitung (30) einen sich nach oben erstreckenden Abschnitt (44) enthält, der sich nach oben von dem in Fahrzeugbreite erstreckenden Abschnitt (43) erstreckt, und **dadurch**, dass sich der sich nach oben erstreckende Abschnitt wenigstens teilweise zwischen dem Stoßdämpfer (22) und dem Hinterrad (12) befindet, wenn das Motorrad (1) von der Seite betrachtet wird.

7. Motorrad nach einem der Ansprüche 1 bis 6, **dadurch gekennzeichnet, dass** der sich von vorne nach hinten erstreckende Abschnitt (42) einen vorderen Abschnitt (45) und einen hinteren Abschnitt (46) enthält, die mit Hilfe eines Verbindungselementes (47) miteinander verbunden sind.

8. Motorrad nach einem der Ansprüche 1 bis 7, **dadurch gekennzeichnet, dass** der Schalldämpfer (31) ein Halteelement (34) enthält, das dazu eingerichtet ist, in einer Richtung des Fahrzeuges von vorne nach hinten in einen Halteabschnitt (33) des Rahmens (2) eingefügt zu werden.

9. Motorrad nach einem der Ansprüche 1 bis 8, weiterhin **dadurch gekennzeichnet, dass** der Schalldämpfer (31) weiterhin Befestigungselemente enthält, die dazu eingerichtet sind, in der Fahrzeugbreitenrichtung befestigt zu werden, um Abschnitte (35) des Rahmens (2) zu halten.

## Revendications

1. Motocycle (1) comprenant un cadre (2), un moteur (3) supporté par le cadre (2), un système de gaz d'échappement (4) comprenant un tuyau principal de gaz d'échappement (3) qui part du moteur (3), et un silencieux (31) relié au tuyau principal de gaz d'échappement (30) ;
le motocycle (1) comprenant par ailleurs un bras oscillant (5) qui est relié pivotant au châssis (2) et qui comprend une partie d'extrémité arrière sur laquelle une roue arrière (12) est supportée, le motocycle (1) comprenant par ailleurs un amortisseur (22) disposé entre le bras oscillant (5) et le châssis (2) et derrière le moteur (3) ;
étant précisé que le tuyau principal de gaz d'échappement (30) comprend une partie avant-arrière (42) qui s'étend vers l'arrière sur un côté du moteur dans un sens avant-arrière du véhicule ; le tuyau principal de gaz d'échappement (30) comprenant une partie (43) s'étendant sur la largeur du véhicule, qui va de ladite partie avant-arrière (42), en passant derrière le moteur (3), jusqu'au côté opposé ;
**caractérisé en ce que** la partie (43) s'étendant dans le sens de la largeur du véhicule comprend une partie rectiligne de réception de catalyseur (50) qui s'étend globalement à l'horizontale et en diagonale vers l'arrière, sur une vue de dessus du motocycle, **en ce qu'**un catalyseur (51) est logé dans ladite partie de réception de catalyseur (50), **en ce que** l'amortisseur (22) est disposé, dans une position inclinée, entre le bras oscillant (5) et le cadre (2), avec sa partie supérieure dirigée vers l'avant du motocycle, et **en ce que** la partie (43) s'étendant dans le sens de la largeur du véhicule est située dans un espace compris entre l'amortisseur (22) et la roue arrière (12).

2. Motocycle selon la revendication 1, **caractérisé en ce que** la partie (43) s'étendant dans le sens de la largeur du véhicule est située dans un espace défini dans le sens avant-arrière du motocycle (1) par l'amortisseur (22) et la roue arrière (12), ledit espace étant limité, en bas, par le bras oscillant (12).

3. Motocycle selon l'une quelconque des revendications 1 à 2, **caractérisé en ce que** la partie (43) s'étendant dans le sens de la largeur du véhicule est placée globalement dans la même position verticale qu'une partie supérieure de l'amortisseur (22).

4. Motocycle selon la revendication 3, **caractérisé en ce que** la partie (43) s'étendant dans le sens du véhicule couvre au moins en partie l'amortisseur, sur une vue de dessus d'un véhicule.

5. Motocycle selon l'une quelconque des revendications 1 à 4, le motocycle comprenant par ailleurs un siège (11) monté sur le cadre (2), et un épurateur d'air (28),
**caractérisé en ce que** l'épurateur d'air (28) est situé au-dessous du siège (11) et au-dessus du catalyseur (51), et **en ce qu'**un élément en forme de plaque (52) est disposé entre l'épurateur d'air (28) et le catalyseur (51).

6. Motocycle selon l'une quelconque des revendications 1 à 5, étant précisé que le tuyau principal de gaz d'échappement (30) comprend une partie s'étendant vers le haut (44) qui s'étend vers le haut à partir de ladite partie (43) s'étendant dans le sens de la largeur du véhicule, et en ce que ladite partie s'étendant vers le haut (44) est placée au moins en partie entre l'amortisseur (22) et la roue arrière (12), sur une vue latérale du motocycle (1).

7. Motocycle selon l'une quelconque des revendications 1 à 6, **caractérisé en ce que** la partie avant-arrière (42) comprend une partie avant (45) et une partie arrière (46) reliées à l'aide d'un élément de liaison (47).

8. Motocycle selon l'une quelconque des revendications 1 à 7, **caractérisé en ce que** le silencieux (31) comprend un élément de support (34) apte à être introduit, dans un sens avant-arrière du véhicule, dans une partie de support (33) du cadre principal (2).

9. Motocycle selon l'une quelconque des revendications 1 à 8, **caractérisé par** ailleurs en ce que l'amortisseur (31) comprend par ailleurs des éléments de fixation aptes à être fixés, dans le sens de la largeur du véhicule, à des parties de support (35) du cadre (2).
